# EUROPÄISCHE PATENTSCHRIFT

(11) **EP 0 937 403 B1**
(45) Veröffentlichungstag und Bekanntmachung des Hinweises auf die Patenterteilung: **10.04.2002**
(21) Anmeldenummer: 99101458.0
(22) Anmeldetag: 27.01.1999
(51) Int. Cl.: A22C 11/12, B65B 51/04

(54) **Doppelclip-Verfahren und Maschine für schlauchförmige Verpackungen**
Double-clip method and device for tubular casings
Procédé et dispositif à double-clip pour emballages tubulaires

(30) Priorität: 18.02.1998 DE 19806783
(43) Veröffentlichungstag der Anmeldung: 25.08.1999
(73) Patentinhaber: Poly-clip System GmbH & Co. KG, 60489 Frankfurt am Main (DE)
(72) Erfinder: Vermehren, Günter, 61250 Usingen (DE)
(74) Vertreter: Fischer, Ernst, Dr.

(56) Entgegenhaltungen:
- EP-A- 0 000 821
- EP-A- 0 301 768
- DE-A- 1 632 122
- DE-A- 1 916 294
- DE-A- 2 054 348
- DE-A- 2 711 430
- DE-B- 1 027 548

## Beschreibung

Die Erfindung betrifft ein Verfahren zum Erzeugen eines im wesentlichen füllgutfreien Zopfes in einer befüllten, schlauchförmigen Verpackungshülle zwecks Verschließen derselben mit zwei benachbarten Verschlußklammern, bei dem eine Verdrängerklappe die befüllte Verpackungshülle auf der zum Setzen der Verschlußklammern erforderlichen Länge auf einmal zusammendrückt. Die Erfindung betrifft außerdem eine Vorrichtung zum Erzeugen eines im wesentlichen füllgutfreien, für zwei benachbarte Verschlußklammern ausreichend langen Zopfes in einer befüllten, schlauchförmigen Verpackungshülle, mit einer Verdrängerklappe von einer für die Zopflänge erforderlichen Breite.

Um befüllte schlauchförmige Verpackungen herzustellen, wird üblicherweise Füllgut durch ein Füllrohr in die zunächst einseitig verschlossene Verpackungsschlauchhülle eingefüllt. Das verschlossene Ende der Verpackungsschlauchhülle befindet sich dabei vor der Füllrohrmündung, und die noch unbefüllte Verpackungsschlauchhülle ist als Vorrat auf das Füllrohr aufgezogen. Beim Befüllen wird ständig Verpackungsschlauchhülle nach- und vom Vorrat auf dem Füllrohr abgezogen. Sobald ein Teil der Verpackungsschlauchhülle ausreichend befüllt ist, wird das Befüllen unterbrochen und die Verpackungsschlauchhülle unmittelbar vor der Füllrohrmündung derart eingeschnürt, daß ein füllgutfreier Verpackungshüllenzopf entsteht, dessen Länge ausreicht, um den Zopf mit zwei benachbarten Verschlußklammern zu verschließen. Nach dem Erzeugen des füllgutfreien Zopfes wird dieser mit zwei Verschlußklammern verschlossen und anschließend im allgemeinen zwischen den beiden Verschlußklammern durchtrennt.

Wenn das Erzeugen des füllgutfreien Zopfes mit Hilfe einer Verdrängerklappe erfolgt, ist diese um eine Schwenkachse gegen eine feststehende Gegenfläche schwenkbar. Während der Schwenkbewegung der Verdrängerklappe wird die Verpackungshülle auf der gesamten, für das Verschließen erforderlichen Länge zwischen der Verdrängerklappe und der Gegenfläche gleichzeitig eingequetscht. Dabei strömt das Füllgut zu beiden Seiten aus demjenigen Teil der Verpackung heraus, der von der Verdrängerklappe zusammengequetscht wird, so daß die Verpackunghülle anschließend auf der zum Verschließen erforderlichen Länge im wesentlichen füllgutfrei ist. Die Erfahrung mit Verdrängerklappen zeigt, daß damit erzeugte Packungen nicht gewichtsgenau sind. Beispielsweise kann eine Wurst von ca. 25 g Gesamtgewicht Gewichtsschwankungen von ± 5 g aufweisen, wenn das Verdrängen der Wurstmasse und das Einschnüren der Wursthülle mittels einer Verdrängerklappe geschieht.

Zum Verschließen von Würsten, bei denen es auf eine hohe Gewichtsgenauigkeit ankommt, werden daher in der Regel Spreizverdränger verwendet. Spreizverdränger bestehen im wesentlichen aus zwei relativ zueinander verschiebbaren Verdrängerscheren. Die beiden Verdrängerscheren sind einander zunächst unmittelbar benachbart, wenn sie die Schlauchhülle durch Schließen der Scherenhälften einschnüren. Dabei entsteht nur ein kurzer füllgutfreier Zopf, der nicht ausreicht, um mit Verschlußklammern verschlossen zu werden. Die füllrohrferne Verdrängerschere wird daher zum Verlängern des füllgutfreien Zopfes anschließend axial in Füllrohrlängsrichtung von der füllrohrnahen Verdrängerschere weg bewegt. Schließlich wird der füllgutfreie Zopf durch Setzen zweier Verschlußclips zwischen den beiden gespreizten Verdrängerscheren verschlossen. Mit Hilfe eines Spreizverdrängers und dem soeben beschriebenen Verfahren lassen sich zwar wesentlich gewichtsgenauere Würste herstellen als mit einer Verdrängerklappe. Ein Nachteil des Spreizverdrängers ist aber, daß er einen höheren konstruktiven Aufwand erfordert und daher sowohl teurer als auch störanfälliger ist.

Der Erfindung liegt daher die Aufgabe zugrunde, eine technische Lehre für das gewichtsgenaue Verschließen von schlauchförmigen Verpackungen wie z.B. für Würste mittels zweier benachbarter Verschlußklammern anzugeben, die mit einem geringen apparativen Aufwand verbunden ist.

Die Lösung dieser Aufgabe besteht erfindungsgemäß zunächst in einem Verfahren der eingangs genannten Art, bei dem vor dem Zusammendrücken eine Portion des Füllgutes in der Verpackungshülle vom übrigen Füllgut gewichtsgenau abgeteilt wird. Dem liegt die Erkenntnis zugrunde, daß sich durch das Abteilen einer Portion des Füllgutes vom übrigen Füllgut vor dem Verdrängen auch mit - technisch wenig aufwendigen - Verdrängerklappen besonders gewichtsgenaue Verpackungen herstellen lassen. Aus der DE-OS 1 632 122 und der DE-AS 1 027 548 ist es zwar bekannt, bei Lamellen-Verdrängerklappen bzw. Verdrängerscheren ein zusätzliches Vorverdrängerelement anzuordnen, welches etwas über die eigentlichen Verdrängerelemente vorsteht und deshalb eine sicherere Axialverdrängung des Füllguts bewirken soll; eine gewichtsgenaue Abteilung und Portionierung des Füllguts läßt sich damit aber nicht erreichen.

Vorzugsweise wird die Portion des Füllgutes duch Zusammenquetschen der Verpackungshülle an der Abteilstelle vom übrigen Füllgut abgeteilt. Dabei ist es grundsätzlich unerheblich, ob die Verpackungshülle an der Abteilstelle flach zusammengequetscht oder zu einem kurzen Zopf eingeschnürt wird.

Apparativ besteht die Lösung der vorgenannten Aufgabe in einer Vorrichtung der eingangs genannten Art, die ein in Längsrichtung der Verpackungshülle schmales Abschnürelement aufweist, mit dem eine Portion von dem Füllgut in der Verpackungshülle vor dem Zusammendrücken der Verpackungshülle abteilbar ist. Dies vereint in vorteilhafter Weise den einfachen Aufbau eines Klappenverdrängers mit der hohen Gewichtsgenauigkeit eines Spreizverdrängers und ist insbesondere dazu geeignet, nach dem erfindungsgemäßen Verfahren betrieben zu werden.

Bevorzugt wird eine Vorrichtung, bei der das Abschnürelement in unmittelbarer Nachbarschaft zu der Verdrängerklappe oder - bei einer Verdrängerklappe, die aus in Längsrichtung der Verpackungshülle mehreren, um eine gemeinsame Achse schwenkbaren Abschnitten besteht - zwischen den Abschnitten der Verdrängerklappe angeordnet ist. Auf diese Weise wird sichergestellt, daß die Abteilstelle nach dem Verdrängen Bestandteil des füllgutfreien Verpackungshüllenabschnittes ist.

Das Abschnürelement weist vorzugsweise eine Quetschkante an einem beweglichen Bauteil und eine Gegenkante oder -fläche an einem anderen, ortsfesten Bauteil auf. Quetschkante und Gegenkante bzw. -fläche haben in einer ersten Position einen Abstand voneinander, der größer ist als der Durchmesser einer gefüllten, zu verschließenden Verpackungshülle. In einer zweiten Position quetschen die Quetschkante und deren Gegenkante oder -fläche die befüllte Verpackungshülle so zwischen sich ein, daß zwar das Füllgut in der Verpackungshülle an der Quetschstelle geteilt wird, die Verpackungshülle aber immer noch zwischen Quetschkante und Gegenkante oder -fläche hindurchgezogen werden kann. Die Verpackungshülle ist also nicht fest zwischen der Quetschkante und der Gegenkante eingeklemmt, wenn das Abschnürelement das Füllgut in der Verpackungshülle teilt. Dadurch ist es möglich, daß die Verdrängerklappe oder ein Teil derselben auch auf der füllrohrabgewandten Seite des Abschnürelementes auf die Verpackungshülle einwirken und durch Zusammendrücken derselben Füllgut verdrängen kann, wobei weiteres Verpackungshüllenmaterial durch das Abschnürelement hindurch nachgezogen wird, ohne daß Füllgut in die gewichtsgenau abgeteilte Portion übertritt. ist die Verdrängerklappe ausschließlich zwischen Abschnürelement und Füllrohrmündung angeordnet, kann das Abschnürelement auch so weit geschlossen werden, daß es die Verpackungshülle zwischen sich einklemmt, da dann kein Nachziehen der Verpackungshülle durch das Abschnürelement hindurch nötig ist.

Bei einem Abschnürelement, das eine Quetschkante an einem beweglichen ersten Bauteil aufweist, ist dieses erste Bauteil vorzugsweise ein linear beweglicher Schieber mit einer im wesentlichen rechteckigen Öffnung, von deren quer oder schräg zur Bewegungsrichtung des Schiebers verlaufenden Innenkanten mindestens eine die Quetschkante bildet. Bei einer Variante eines solchen Abschnürelementes verlaufen die Quetschkante und deren Gegenkante oder -fläche parallel zueinander und werden bei Bewegung des Schiebers aufeinander zu oder voneinander weg bewegt. Von einem solchen Abschnürelement wird die Verpackungshülle beim Abteilen einer Portion des Füllgutes flach zusammengedrückt. Verläuft dagegen die Quetschkante schräg zur Gegenkante und ist gegenüber dieser seitlich etwas versetzt, kann die Verpackungshülle beim Abteilen einer Füllgutportion durch Bewegen des Schiebers gleich zu einem (kurzen) Zopf zusammengerafft werden.

Das Abschnürelement wird vorzugsweise von einem Pneumatikzylinder angetrieben, der bei einem Abschnürelement mit Schieber unmittelbar an dem Schieber angreift.

Bei einer Vorrichtung mit zwei Clipvorrichtungen zum gleichzeitigen Setzen und Schließen von zwei Verschlußklammern befindet sich das Abschnürelement vorzugsweise ungefähr mittig zwischen den beiden Clipvorrichtungen. Ist eine solche Vorrichtung mit einem Hüllentrennmesser zwischen den beiden Clipvorrichtungen ausgestattet, weist das Abschnürelement vorzugsweise einen Schlitz auf, in den das Hüllentrennmesser zum Durchtrennen der Verpackungshülle an der Quetschstelle eingreifen kann.

Die Erfindung soll nun anhand eines Ausführungsbeispiels mit Hilfe der Zeichnungen näher erläutert werden. Deren Figuren zeigen:
- Fig. 1: den Verschließbereich einer Doppelclipmaschine mit offener Verdrängerklappe in der Seitenansicht;
- Fig. 2: die Ansicht aus Fig. 1 mit einer anderen Position des Abschnürelementes;
- Fig. 3: die Ansicht aus Fig. 2 mit geschlossener Verdrängerklappe;
- Fig. 4: die Ansicht aus Fig. 3 mit teilweise zusammengeraffter Verpackung;
- Fig. 5: die Ansicht aus Fig. 4 mit verclipptem Wurstzopf; und
- Fig. 6: eine Vorderansicht der Doppelclipmaschine aus Fig. 1, bei der Verdrängerklappe und Wurst nicht dargestellt sind.

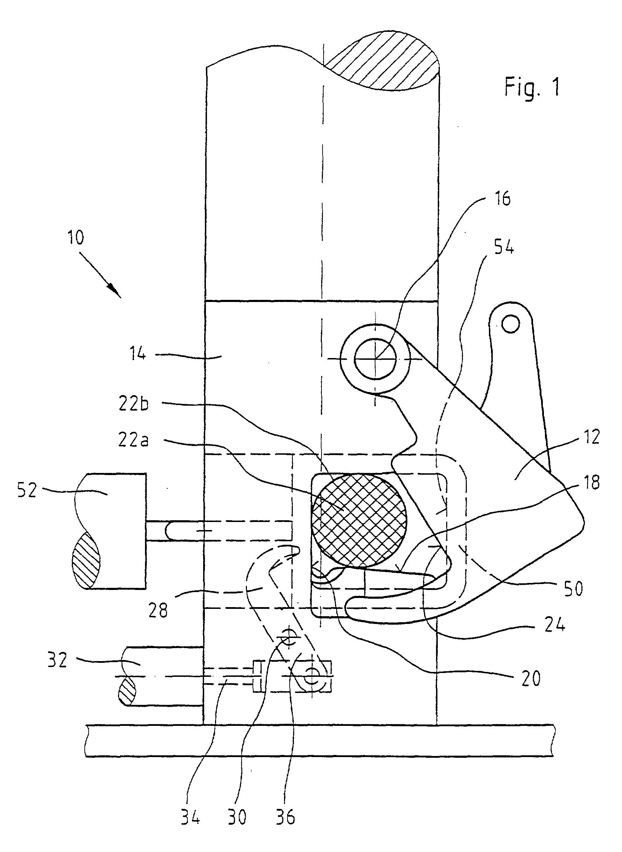

Die in der Zeichnung abgebildete Doppelclipmaschine 10 eignet sich ihrem Namen entsprechend zum gleichzeitigen Setzen zweier Verschlußklammern um einen Verpackungshüllenzopf. Die Doppelclipmaschine 10 ist mit einer Verdrängerklappe 12 ausgestattet und als Schlitzverdränger ausgeführt. Die Verdrängerklappe 1 2 ist an einem feststehenden Gehäuse 14 so angebracht, daß sie um eine Schwenkachse 16 schwenkbar ist. Das Gehäuse 14 weist außerdem Stützflächen 18 und Gegenflächen 20 auf, an denen eine prall befüllte Verpackung 22 anliegt, wenn sie von einer nicht dargestellten Füllmaschine ausgestoßen wird. Die Stirnflächen 20 sind in Fig. 1 - 5 hintereinandergestaffelt, so daß ihre Vielzahl in den Figuren nicht zu erkennen ist. Die Verpackung 22 wird von einer mit Füllgut 22a befüllten, schlauchförmigen Verpackungshülle 22b gebildet.

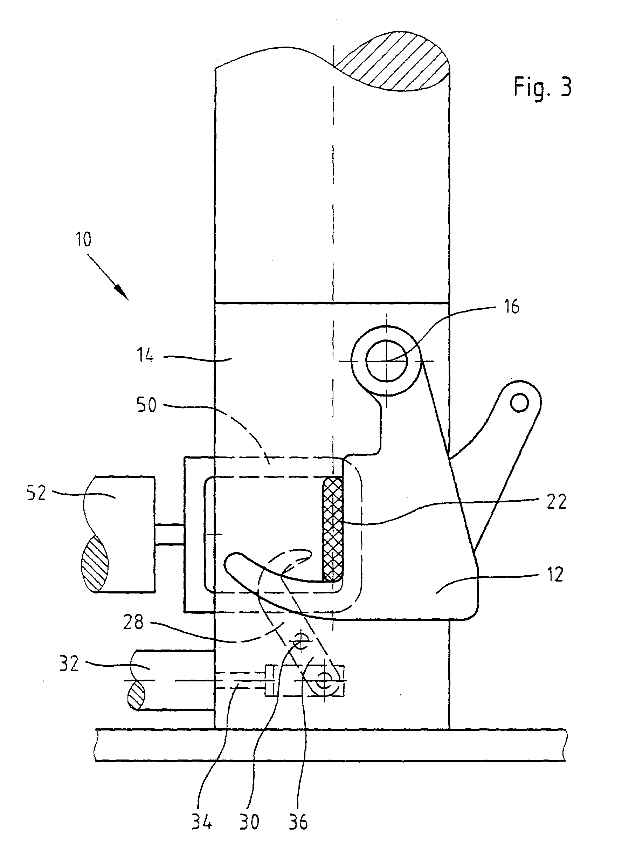

Die Verdrängerklappe 12 ist mit ebenen Stirnflächen 24 versehen, die den Gegenflächen 20 gegenüberliegen und beim Zusammendrücken der Verpackung 22 zum Verdrängen des Füllgutes 22a in der Verpackung mit den Gegenflächen 20 am Gehäuse 14 zusammenwirken. In Fig. 1 ist die Verdrängerklappe 12 geöffnet dargestellt, während sie in Fig. 3 so verschwenkt ist, daß die Verpackungshülle 22b zwischen den Gegenflächen 20 und den Stirnflächen 24 der Verdrängerklappe zusammengedrückt ist. Die Gegenflächen 20 an dem Gehäuse 14 und die ebenen Stirnflächen 24 der Verdrängerklappe 12 liegen in der letztgenannten Position einander parallel gegenüber.

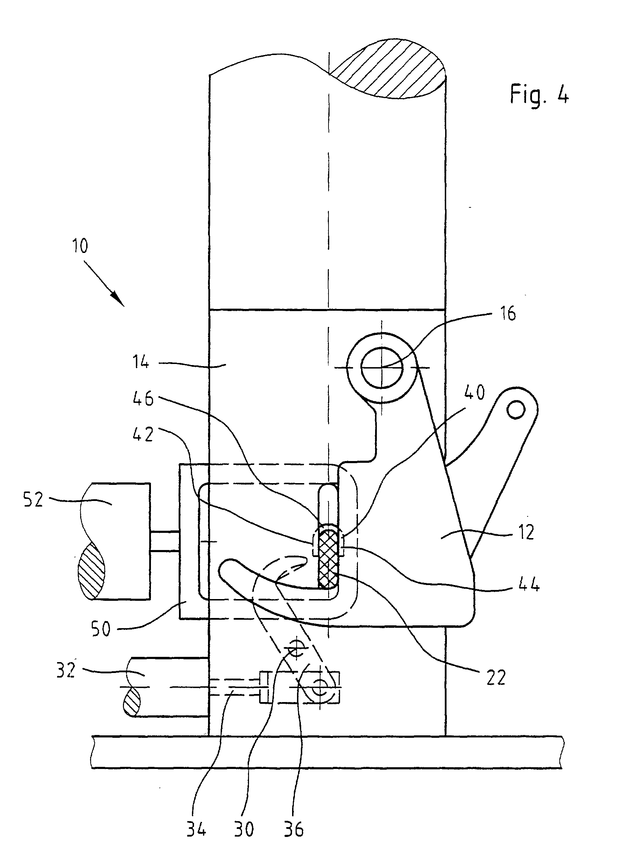

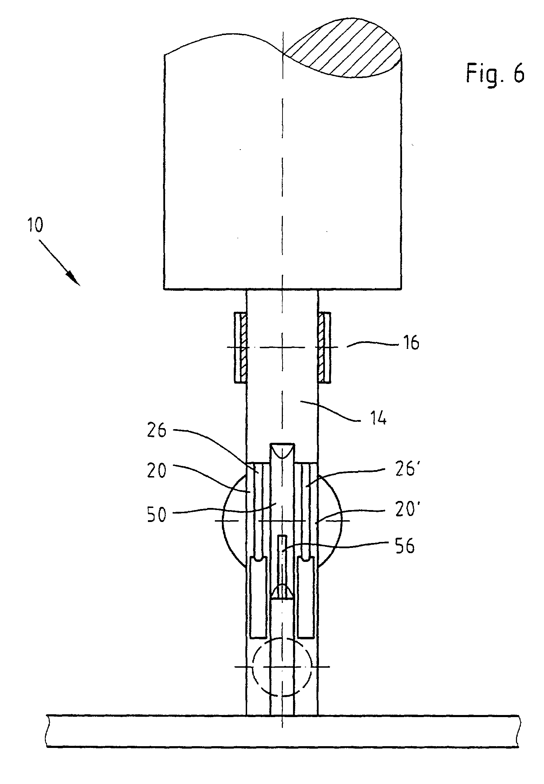

Sowohl in die Gegenflächen 20 als auch in die Stirnflächen 24 der Verdrängerklappe 12 sind Führungsnuten für eine Verschlußklammer eingearbeitet. Die Führungsnuten 26 und 26' in den Gegenflächen 20 sind in Fig. 6 zu erkennen. Um den Blick auf die Führungsnuten 26 und 26' freizumachen, ist in Fig. 6 die Verdrängerklappe 12 weggelassen. Die Führungsnuten 26 und 26' in den Gegenflächen 20 liegen in der in Fig. 3 und 4 abgebildeten Position der Verdrängerklappe den Führungsnuten in den Stirnflächen 24 parallel gegenüber. Die Führungsnuten dienen der Aufnahme und Führung der freien Schenkel einer U-förmig gebogenen Verschlußklammer.

Die Gegenflächen 20 samt Führungsnuten 26 und 26' sowie die Stirnflächen 24 an der Verdrängerklappe 12 sind bei der abgebildeten Doppelclipmaschine zweifach vorhanden, um zwei Verschlußklammern gleichzeitig setzen zu können. Mittig zwischen diesen doppelt vorhandenen Bauteilen zum Verclippen der Verpackungshülle 22b ist ein Trennmesser 28 angeordnet, um einen Verpackungshüllenzopf nach dem Verclippen zwischen den beiden Verschlußklammern durchtrennen zu können. Das Trennmesser 28 ist hebelartig um eine Achse 30 schwenkbar und wird von einem pneumatischen Messerantrieb 32 über eine Schubstange 34 angetrieben. Die Schubstange 34 greift dabei an einem Hebelfortsatz 36 des Trennmessers 28 an.

Nun zur Wirkungsweise der Verdrängerklappe 12 und des Trennmessers 28, die insoweit dem Stand der Technik entspricht. Fig. 1 zeigt die Ausgangsposition, bei der eine von einer nicht abgebildeten Füllmaschine ausgestoßene, prall gefüllte Verpackung 22 von der Stützfläche 18 unterstützt zwischen den Gegenflächen 20 am Gehäuse 14 und den Stirnflächen 24 an der Verdrängerklappe 12 hindurchgeführt ist. Zum Verschließen der Verpackung 22 muß ein Abschnitt ihrer Hülle so weit geleert werden, daß dieser Verpackungshüllenabschnitt weitgehend füllgutfrei ist. Dies geschieht, indem die Verpackung 22 auf der zum Verschließen erforderlichen Länge zwischen den Stirnflächen 24 der Verdrängerklappe und den Gegenflächen 20 am Gehäuse 14 zusammengedrückt wird. Dazu schwenkt die Verdrängerklappe 12 um die Schwenkachse 16 aus der in Fig. 1 gezeigten Position in die in Fig. 3 gezeigte Position. Wie in Fig. 3 zu erkennen ist, ist die Hülle der Verpackung 22 anschließend zwar flach zusammengedrückt und weitgehend füllgutfrei, aber noch nicht zu einem Zopf gerafft.

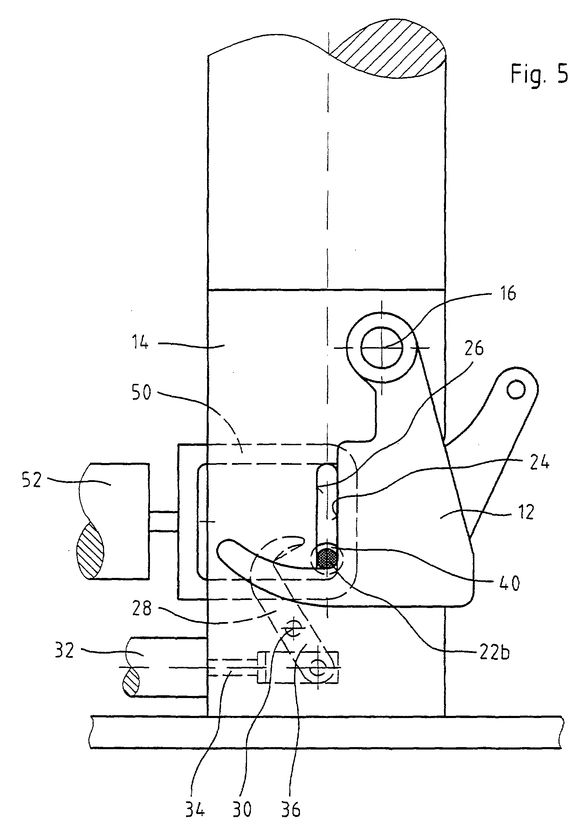

Die Verpackungshülle 22b wird erst zusammengerafft, wenn die Verpackung 22 durch Setzen zweier Verschlußklammern 40 geschlossen wird. Eine Verschlußklammer 40 ist U-förmig gebogen und weist zwei freie Schenkel 42 und 44 auf, die durch einen halbkreisförmig vorgebogenen Klammerboden 46 miteinander verbunden sind. Beim Setzen der Verschlußklammer 40 werden ihre beiden freien Schenkel in jeweils einer der Führungsnuten 26 bzw. 26' und in den gegenüberliegenden Führungsnuten in der Verdrängerklappe 12 geführt. Beim Setzen bewegt sich die Verschlußklammer 40 bezüglich der Zeichnung (siehe insbesondere Fig. 4) entlang den Führungsnuten von oben nach unten. Ihre freien Klammerschenkel 42 und 44 weisen dabei nach unten und nehmen die zusammengedrückte Verpackungshülle 22b zwischen sich auf. Dieser Vorgang ist in einem Zwischenstadium in Fig. 4 abgebildet. Die Führungsnuten in der Gegenfläche 20 und in der Verdrängerklappe 12 laufen in ihrem unteren Ende halbkreisförmig aus und biegen dadurch die freien Klammerschenkel 42 und 44 der Verschlußklammer 40 um den zusammengerafften Hüllenzopf. Dieser Zustand ist in Fig. 5 abgebildet.

Schließlich wird die auf diese Weise verschlossene Verpackungshülle 22b zwischen den beiden Verschlußklammern von dem Trennmesser 28 durchtrennt.

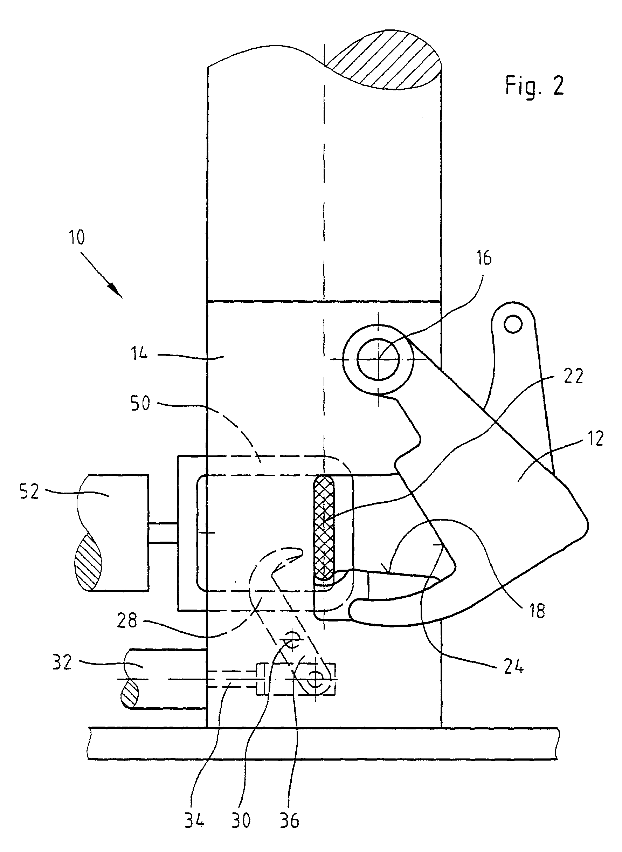

Zusätzlich zu den bisher beschriebenen, bereits aus dem Stand der Technik bekannten Merkmalen und Eigenschaften der Doppelclipmaschine 10 weist diese ein Abschnürelement auf, welches als linear beweglicher Schieber 50 mit einer rechteckigen Öffnung ausgeführt ist. Der Schieber 50 ist mittels eines Pneumatikzylinders 52 zwischen der in Fig. 1 abgebildeten Position und der in Fig. 2 abgebildeten Position hin und her bewegbar. Eine der Innenkanten der rechteckigen Öffnung in dem Schieber 50 dient als Quetschkante 54.

In der in Fig. 1 abgebildeten Ausgangsposition ist die prall gefüllte Verpackung 22 durch die rechteckige Öffnung in dem Schieber 50 hindurchgeführt. Um eine Portion des Füllgutes 22a in der Verpackung 22 abzuteilen, wird der Schieber 50 von dem Pneumatikzylinder 52 aus der in Fig. 1 abgebildeten ersten Position in die in Fig. 2 abgebildete zweite Position bewegt und quetscht dabei mit der Quetschkante 54 die Verpackung 22 so ein, daß in der Verpackungshülle 22b eine Portion des Füllgutes 22a vom übrigen Füllgut 22a abgeteilt wird. Dieser Zustand ist in Fig. 2 abgebildet. Auf diese Weise wird verhindert, daß beim anschließenden Schließen der Verdrängerklappe zum Verdrängen von Füllgut 22a aus einer größeren Länge der Verpackung Füllgut 22a an der Quetschstelle vorbei beispielsweise in die Füllmaschine zurückströmen kann.

In der in Fig. 2 abgebildeten Position quetscht der Schieber 50 die Verpackung 22 aber nicht so weit zusammen, daß nicht noch Verpackungshülle 22b durch die Quetschsteile nachgezogen werden kann, wenn dies beim Zusammendrücken der Verpackung 22 durch die Verdrängerklappe 12 nötig ist.

Sowohl der Schieber 50 als auch das Trennmesser 28 sind jeweils mittig zwischen den Führungsrillen 26 und 26' angeordnet. Der Schieber 50 weist daher einen parallel zur Öffnung im Schieber 50 verlaufenden Schlitz 56 auf, durch den das Trennmesser 28 zum Durchtrennen der Verpackungshülle 22b nach dem Verschließen derselben hindurchgreifen kann. Der Schlitz 56 ist in Fig. 6 zu sehen.

## Patentansprüche

1. Verfahren zum Erzeugen eines im wesentlichen füllgutfreien Zopfes in einer befüllten, schlauchförmigen Verpackungshülle (22b) zwecks Verschließen derselben mit zwei benachbarten Verschlußklammern (40), bei dem eine Verdrängerklappe (12) die befüllte Verpackungshülle (22b) auf der zum Setzen der Verschlußklammern (40) erforderlichen Länge auf einmal zusammendrückt,
**dadurch gekennzeichnet, daß** vor dem Zusammendrücken und unabhängig davon eine Portion des Füllgutes (22a) in der Verpackungshülle (22b) vom übrigen Füllgut (22a) gewichtsgenau abgeteilt wird.

2. Verfahren nach Anspruch 1,
**dadurch gekennzeichnet, daß** die Portion des Füllgutes (22a) durch axial schmales Zusammenquetschen der Verpackungshülle (22b) vom übrigen Füllgut (22a) abgeteilt wird.

3. Vorrichtung zum Erzeugen eines im wesentlichen füllgutfreien, für zwei benachbarte Verschlußklammern ausreichend langen Zopfes in einer befüllten, schlauchförmigen Verpackungshülle (22b), mit einer Verdrängerklappe (12) von einer für die Zopflänge erforderlichen Breite,
**dadurch gekennzeichnet, daß** die Vorrichtung ein von der Verdrängerklappe (12) unabhängiges und unabhängig bewegtes, in Längsrichtung der Verpackungshülle (22b) schmales Abschnürelement (50) aufweist, mit dem eine gewichtsgenaue Portion von Füllgut (22a) in der Verpackungshülle (22b) vor dem Angreifen der Verdrängerklappe an der Verpackungshülle (22b) abteilbar ist.

4. Vorrichtung nach Anspruch 3,
**dadurch gekennzeichnet, daß** das Abschnürelement (50) in unmittelbarer Nachbarschaft zu der Verdrängerklappe (12) angeordnet ist.

5. Vorrichtung nach Anspruch 4, deren Verdrängerklappe (12) aus in Längsrichtung der Verpackungshülle mehreren, um eine gemeinsame Achse (16) schwenkbaren Abschnitten besteht,
**dadurch gekennzeichnet, daß** das Abschnürelement (50) zwischen den Abschnitten der Verdrängerklappe (12) angeordnet ist.

6. Vorrichtung nach einem der Ansprüche 3 bis 5,
**dadurch gekennzeichnet, daß** das Abschnürelement (50) eine Quetschkante (54) an einem beweglichen ersten Bauteil (50) und eine Gegenkante oder -fläche (20) an einem ortsfesten zweiten Bauteil (14) aufweist, wobei Quetschkante (54) und Gegenkante bzw. -fläche (20) in einer ersten Position einen Abstand voneiander haben, der größer ist als der Durchmesser einer gefüllten, zu verschließenden Verpackungshülle (22b) und in einer zweiten Position eine befüllte Verpackunghülle so zwischen sich einquetschen können, daß das Füllgut (22a) in der Verpackungshülle (22b) an der Quetschstelle geteilt wird und die Verpackunghülle gleichzeitig zwischen Quetschkante (54) und Gegenkante oder -fläche (20) hindurchgezogen werden kann.

7. Vorrichtung nach Anspruch 6,
**dadurch gekennzeichnet, daß** das erste Bauteil (50) ein linear beweglicher Schieber (50) mit einer im wesentlichen rechteckigen Öffnung ist, von deren quer oder schräg zur Bewegungsrichtung des Schiebers verlaufenden Innenkanten mindestens eine die Quetschkante (54) bildet.

8. Vorrichtung nach einem der Ansprüche 3 bis 7,
**dadurch gekennzeichnet, daß** das Abschnürelement (50) von einem daran unmittelbar angreifenden Pneumatikzylinder (52) angetrieben wird.

9. Vorrichtung nach einem der Ansprüche 3 bis 8, mit zwei Clipvorrichtungen zum gleichzeitigen Setzen und Schließen von zwei Verschlußklammern (40),
**dadurch gekennzeichnet, daß** sich das Abschnürelement (50) ungefähr mittig zwischen den beiden Clipvorrichtungen befindet.

10. Vorrichtung nach Anspruch 9 mit einem Hüllentrennmesser (28) zwischen den beiden Clipvorrichtungen,
**dadurch gekennzeichnet, daß** das Abschnürelement (50) einen Schlitz (56) aufweist, in den das Hüllentrennmesser (28) zum Durchtrennen der Verpackunghülle (22b) an der Quetschstelle eingreifen kann.

## Claims

1. A method of producing a neck substantially free from filling in a filled tubular packaging casing (22b) for the purpose of sealing the same with two adjacent closure clips (40), wherein a crimping flap (12) squeezes all at once the filled packaging casing (22b) on the length required for setting the closure clips (40),
**characterized in that** before squeezing and independent thereof a portion of the filling (22a) in the packaging casing (22b) is separated from the remaining filling (22a) at a precise weight.

2. The method as claimed in claim 1,
**characterized in that** the portion of the filling (22a) is separated from the remaining filling (22a) by means of an axially narrow squeezing of the packaging casing (22b).

3. An apparatus for producing a neck substantially free from filling and long enough for two adjacent closure clips in a filled tubular packaging casing (22b), including a crimping flap (12) of a width required for the neck length,
**characterized in that** the apparatus has a crimping element (50) independent of the crimping flap (12) and independently movable, which is narrow in longitudinal direction of the packaging casing (22b), and by means of which a portion of filling (22a) of a precise weight can be separated in the packaging casing (22b) before the crimping flap acts on the packaging casing (22b).

4. The apparatus as claimed in claim 3, **characterized in that** the crimping element (50) is arranged in direct vicinity of the crimping flap (12).

5. The apparatus as claimed in claim 4, whose crimping flap (12) consists of a plurality of portions in longitudinal direction of the packaging casing, which can be swivelled about a common axis (16),
**characterized in that** the crimping element (50) is arranged between the portions of the crimping flap (12).

6. The apparatus as claimed in any of claims 3 to 5,
**characterized in that** the crimping element (50) has a squeezing edge (54) on a movable first component (50) and a counteredge or countersurface (20) on a stationary second component (14), where in a first position squeezing edge (54) and counteredge or countersurface (20) have a distance from each other which is larger than the diameter of a filled packaging casing (22b) to be sealed, and in a second position can squeeze a filled packaging casing such that the filling (22a) in the packaging casing (22b) is separated at the crimping point, and the packaging casing can at the same time be pulled through between the squeezing edge (54) and the counteredge or countersurface (20).

7. The apparatus as claimed in claim 6,
**characterized in that** the first component (50) is a linearly movable slide (50) with a substantially rectangular opening, of whose inner edges extending transverse or at an angle with respect to the direction of movement of the slide at least one forms the squeezing edge (54).

8. The apparatus as claimed in any of claims 3 to 7,
**characterized in that** the crimping element (50) is driven by a pneumatic cylinder (52) directly acting thereon.

9. The apparatus as claimed in any of claims 3 to 8, comprising two clip devices for simultaneously setting and sealing two closure clips (40), **characterized in that** the crimping element (50) is disposed approximately in the middle between the two clip devices.

10. The apparatus as claimed in claim 9, including a casing knife (28) between the two clip devices,
**characterized in that** the crimping element (50) has a slot (56), into which the casing knife (28) can extend for cutting through the packaging casing (22b) at the crimping point.

## Revendications

1. Procédé pour réaliser une torsade sensiblement sans produit de remplissage dans une enveloppe d'emballage pleine (22b) se présentant sous la forme d'un boyau dans le but de fermer celui-ci avec deux agrafes de fermeture adjacentes (40), dans lequel un volet de refoulement (12) comprime d'un coup l'enveloppe d'emballage pleine (22b) sur la longueur nécessaire pour mettre en place les agrafes de fermeture (40), **caractérisé en ce que** avant la compression et indépendamment de celle-ci une portion du produit de remplissage (22a) dans l'enveloppe d'emballage (22b) est séparée, d'une manière précise en poids, du produit de remplissage restant (22a).

2. Procédé selon la revendication 1, **caractérisé en ce que** la portion du produit de remplissage (22a) est séparée du produit de remplissage restant en comprimant étroitement dans la direction axiale l'enveloppe d'emballage (22b).

3. Dispositif pour réaliser une torsade, sensiblement sans produit de remplissage et suffisamment longue pour deux agrafes de fermeture adjacentes, dans une enveloppe d'emballage pleine (22b) se présentant sous la forme d'un boyau, lequel dispositif comporte un volet de refoulement (12) d'une largeur nécessaire à la longueur de la torsade, **caractérisé en ce que** le dispositif comporte un élément d'étranglement (50) étroit, indépendant du volet de refoulement et déplacé indépendamment dans la direction longitudinale de l'enveloppe d'emballage (22b), au moyen duquel il peut être séparé une portion d'un poids précis du produit de remplissage (22a) dans l'enveloppe d'emballage (22b) avant que le volet de refoulement n'attaque l'enveloppe d'emballage (22b).

4. Dispositif selon la revendication 3, **caractérisé en ce que** l'élément d'étranglement (50) est disposé au voisinage immédiat du volet de refoulement (12).

5. Dispositif selon la revendication 4, dont le rabat de refoulement (12) est constitué dans la direction longitudinale de l'enveloppe d'emballage de plusieurs portions pivotantes autour d'un axe commun (16), **caractérisé en ce que** l'élément d'étranglement (50) est disposé entre les portions du volet de refoulement (12).

6. Dispositif selon l'une des revendications 3 à 5, **caractérisé en ce que** l'élément d'étranglement (50) possède un bord de pincement (54) sur une première pièce mobile (50) et un contre-bord ou une contre-surface (20) sur une seconde pièce immobile (14), le bord de pincement (54) et le contre-bord ou la contre surface (20) étant dans une première position à une distance l'un de l'autre qui est supérieure au diamètre d'une enveloppe d'emballage pleine (22b) à fermer et pouvant pincer entre eux dans une seconde position une enveloppe d'emballage pleine de telle sorte que le produit de remplissage (22a) dans l'enveloppe d'emballage (22b) est divisé à l'endroit du pincement et l'enveloppe d'emballage peut être tirée en même temps entre le bord de pincement (54) et le contre-bord ou la contre-surface (20).

7. Dispositif selon la revendication 6, **caractérisé en ce que** la première pièce (50) est un coulisseau (50) mobile linéairement, dans lequel est ménagée une ouverture sensiblement rectangulaire dont au moins un bord de pincement (54) forme les bords intérieurs s'étendant transversalement ou obliquement à la direction de déplacement du coulisseau.

8. Dispositif selon l'une des revendications 3 à 7, **caractérisé en ce que** l'élément d'étranglement (50) est entraîné par un vérin pneumatique (52) attaquant directement celui-ci.

9. Dispositif selon l'une des revendications 3 à 8, comportant deux dispositifs de sertissage destinés à mettre en place et à fermer deux agrafes de fermeture (40), **caractérisé en ce que** l'élément d'étranglement (50) se trouve à peu près à mi-chemin entre les deux dispositifs de sertissage.

10. Dispositif selon la revendication 9 comportant un sectionneur d'enveloppe (28) entre les deux dispositifs de sertissage, **caractérisé en ce que** l'élément d'étranglement (50) comporte une rainure (56) dans laquelle le sectionneur d'enveloppe (28) peut s'engager à l'endroit de pincement afin de sectionner l'enveloppe d'emballage (22b).
